# EUROPÄISCHE PATENTSCHRIFT

(11) **EP 2 753 519 B1**
(45) Veröffentlichungstag und Bekanntmachung des Hinweises auf die Patenterteilung: **18.11.2015**
(21) Anmeldenummer: 12766869.7
(22) Anmeldetag: 05.09.2012
(51) Int. Cl.: B60T 15/02, B60T 17/22

(54) **STEUERVENTILDICHTUNGEN UND STEUERVENTILE MIT DER STEUERVENTILDICHTUNG**
CONTROL VALVE SEALS AND CONTROL VALVES COMPRISING A CONTROL VALVE SEAL
JOINTS DE SOUPAPES DE COMMANDE ET SOUPAPES DE COMMANDE COMPORTANT CE JOINT

(30) Priorität: 06.09.2011 DE 102011112550
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: HELLER, Martin, 85716 Unterschleißheim (DE); CZYPIONKA, Simon, 81825 München (DE); PETTER, Thomas, 80336 München (DE); KRYLOV, Vladimir, 127322 Moskau (RU); ROMANOV, Sergey, 111558 Moskau (RU); SIMON, Timm, 80636 München (DE); HESSELBARTH, Udo, 81549 München (DE)
(86) Internationale Anmeldenummer: PCT/DE2012/100268
(87) Internationale Veröffentlichungsnummer: WO 2013/034150

(56) Entgegenhaltungen:
- FR-A1- 2 685 943
- US-A- 5 869 754

## Beschreibung

Die Erfindung betrifft allgemein Fahrzeuge und insbesondere Schienenfahrzeuge. Weiterhin betrifft die Erfindung eine Steuerventildichtung und ein Steuerventil mit der Steuerventildichtung.

Aus dem Fachbuch Asadchenko , 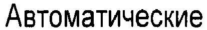 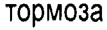 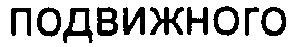 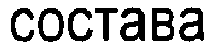 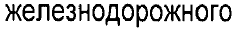 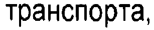 Moskau 2002, ISBN 5-89035-073-0 ist ein Pneumatisches Steuerventil zum Ansteuern eines Bremszylinders mit einem Bremszylinderdruck basierend auf einem einstellbaren Hauptdruck bekannt. Das Steuerventil umfasst einen Tragekörper mit einer den Hauptluftleitungsdruck führenden Hauptluftleitung, einer den Bremszylinderdruck führenden Bremszylinderdruckleitung und einer einen Steuerdruck führenden Steuerdruckleitung. Ferner umfasst das Steuerventil ein Leitungsteil zum Empfangen des Hauptluftleitungsdruckes aus der Hauptluftleitung und zum Einspeisen des Steuerdruckes in die Steuerdruckleitung. Das Leitungsteil ist am Tragekörper über eine Flanschverbindung gehalten. Schließlich umfasst das Steuerventil ein Hauptteil zum Empfangen des Steuerdruckes aus der Steuerdruckleitung und zum Einspeisen des Bremszylinderdruckes in die Bremszylinderdruckleitung. Auch das Hauptteil ist über eine Flanschverbindung am Tragekörper gehalten.

Die US 5 869 754 A offenbart Dichtungen zum Abdichten einer Flanschverbindung zwischen einem an einem Tragekörper ausgebildeten Flansch und einem an einer Steuerventilkomponente ausgebildeten Flansch, umfassend einen flächenförmig ausgebildeten Dichtungskörper zur Aufnahme zwischen den beiden Flanschen, einen durch den Dichtungskörper geführten Druckluftkanal zum Leiten von Druckluft zwischen den beiden Flanschen, der von einer auf dem Dichtungskörper getragenen ersten Dichtlippe umfänglich umgeben ist und eine durch den Dichtungskörper geführten zweiten Druckluftkanal zum Leiten von Druckluft zwischen den beiden Flanschen.

Es ist Aufgabe der Erfindung, das bekannte Steuerventil zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Steuerventildichtung zum Abdichten einer Flanschverbindung zwischen einem an einem Tragekörper ausgebildeten Flansch und einem an einer Steuerventilkomponente ausgebildeten Flansch
- einen flächenförmig ausgebildeten Dichtungskörper zur Aufnahme zwischen den beiden Flanschen,
- einen durch den Dichtungskörper geführten ersten Druckluftkanal zum Leiten von Druckluft zwischen den beiden Flanschen, der von einer auf dem Dichtungskörper getragenen ersten Dichtlippe umfänglich umgeben ist,
- einen durch den Dichtungskörper geführten zweiten Druckluftkanal zum Leiten von Druckluft zwischen den beiden Flanschen, der von einer auf dem Dichtungskörper getragenen zweiten Dichtlippe umfänglich umgeben ist, und
- eine dritte Dichtlippe, die auf dem Dichtungskörper zwischen der ersten Dichtlippe und der zweiten Dichtlippe ausgebildet ist.

Der angegebenen Steuerventildichtung liegt die Überlegung zugrunde, dass die Flanschverbindung absolut luftdicht sein sollte, damit aus dem durch die Flanschverbindung geführten Druckluftkanal keine Druckluft entweicht um die absoluten Drücke konstant zu halten, da Undichtigkeiten für ein Fehlverhalten des Steuerventils sorgen können. Sind die beiden Flansche der Flanschverbindung absolut eben und liegen plan aufeinander, könnte die luftdichte Verbindung allein durch die beiden Flansche der Flanschverbindung realisiert werden. Dies ist aufgrund fertigungstechnischer Toleranzen nicht realisierbar, weshalb in der Regel zwischen die beiden Flansche eine Steuerventildichtung eingesetzt wird, die die Unebenheiten der Flansche ausgleicht. Die Flansche werden mit einer hohen beispielsweise durch Verschraubung aufgebrachten Flächenkraft gegeneinander gedrückt, wodurch die Steuerventildichtung in die Unebenheiten der Flansche eingedrückt wird und diese verschließt.

Der angegebenen Steuerventildichtung liegt weiterhin die Überlegung zugrunde, dass eine zuvor genannte Steuerventildichtung derart aufgebaut sein könnte, dass zwischen zwei Druckluftkanälen durchgängige Steuerventildichtungsbereiche ausgebildet sind. Im Rahmen der angegebenen Steuerventildichtung wird jedoch erkannt, dass bei derart durchgängigen Steuerventildichtungsbereichen ein sehr hohes zu verpressendes Steuerventildichtungsvolumen vorhanden wäre, wodurch die Flansche mit einer sehr hohen Presskraft auf die Steuerventildichtung gepresst werden müssten, um eine ausreichende Dichtkraft zu erzeugen.

Demgegenüber ist es Gedanke der angegebenen Steuerventildichtung, eine ausreichende Dichtkraft mit einer geringeren Presskraft zu erzeugen. Dies wird dadurch erreicht, dass das zu verpressende Dichtmaterial verringert wird, wofür in die Oberfläche des Dichtungskörpers Oberflächenkonturen in Form von Dichtlippen eingeformt werden. An diesen Oberflächenkonturen wird lokal erhöhte Dichtwirkung erzeugt, wobei aufgrund des geringeren verpressten Volumens an Dichtmaterial die gesamte Verpressung klein gehalten wird.

In einer Weiterbildung weist die erste und zweite Dichtlippe je einen konischen Querschnitt auf. Unter einem konischen Querschnitt soll nachstehend ein Querschnitt verstanden werden, bei dem sich die Dichtlippe vom Dichtungskörper weg im Querschnitt verjüngt. Die dem Dichtungskörper gegenüberliegende Seite des konischen Querschnitts kann dabei jede beliebige Form, wie spitz, gerundet oder gerade aufweisen. Durch den konischen Querschnitt kann das Steuerventildichtungsmaterial an den Auflageflächen am Flansch bei einer angelegten Presskraft parallel zur Flanschoberfläche entweichen, während die zum Dichtungskörper immer breiter werdende Geometrie der Steuerventildichtungslippe dieser eine optimale Stabilität verleiht.

In einer besonderen Weiterbildung der angegebenen Steuerventildichtung sind die erste Dichtlippe nach Art einer in den ersten Druckluftkanal gerichteten Rückschlagklappe und/oder die zweite Dichtlippe nach Art einer in den zweiten Druckluftkanal gerichteten Rückschlagklappe ausgebildet. Das heißt, dass die erste Dichtlippe und/oder die zweite Dichtlippe zu ihrem entsprechenden Druckluftkanal hin gerichtet sind. Dieser Weiterbildung liegt die Überlegung zugrunde, dass die erste Dichtlippe und die zweite Dichtlippe ein entweichen von Druckluft aus ihrem entsprechenden Druckluftkanal vermeiden sollen. Ein Eindringen von Druckluft von außen in den Druckluftkanal sollte gewöhnlich nicht auftreten. Werden die Dichtlippen als in die Druckkanäle gerichtete Rückschlagklappen ausgeführt, so kann der durch die Druckluft im Druckluftkanal aufgebrachte Druck genutzt werden, die Dichtwirkung weiter zu erhöhen, weil dieser die Dichtlippen gegen die Flansche drückt und somit die oben genannte Presskraft erhöht, so dass die Steuerventildichtung gegenüber aus dem Druckkanal entweichender Druckluft besonders effizient wirkt.

In einer besonders bevorzugten Weiterbildung der angegebenen Steuerventildichtung ist die dritte Dichtlippe zwischen der ersten und zweiten Dichtlippe normal zum flächenförmigen Dichtungskörper ausgerichtet. Das heißt, dass die dritte Dichtlippe weder in Richtung des ersten Druckluftkanals noch in Richtung des zweiten Druckluftkanals eine Rückschlagfunktion besitzt. Die Weiterbildung erkennt, dass die Ausbildung der ersten und zweiten Dichtlippe als Rückschlagklappe zwar die Dichtwirkung hinsichtlich aus dem Druckluftkanal austretender Druckluft verbessert, entweicht dennoch Druckluft aus dem Druckluftkanal, weil sich zwischen der Dichtlippe und dem Flansch beispielsweise Verschmutzung angesammelt hat, die die Dichtwirkung verschlechtert oder gar aufhebt, könnte die Druckluft dann in den anderen Druckluftkanal eindringen, da dieser nicht gegen von außen in den Druckluftkanal eindringende Druckluft gesichert ist. Zwar könnte je für die erste und zweite Dichtlippe eine entsprechende zusätzliche Notdichtlippe nach Art einer Rückschlagklappe vorgesehen werden, die wirkt, wenn entsprechend die erste oder zweite Dichtlippe ausfällt, durch die normal zum flächigenförmigen Dichtungskörper ausgerichtete dritte Dichtlippe kann im Notfall sowohl vom ersten Druckluftkanal in den zweiten als auch vom zweiten Druckluftkanal in den ersten abgedichtet werden, wodurch eine Dichtlippe weniger benötigt wird.

In einer alternativen Weiterbildung der angegebenen Steuerventildichtung ist ein Querschnitt der ersten Dichtlippe und/oder der zweiten Dichtlippe und/oder der dritten Dichtlippe vom Dichtungskörper aus gesehen konisch zulaufend. Konisch im Sinne der vorliegenden Ausführung soll heißen, dass die Dichtlippe eine Auflagefläche besitzt, die größer ist, als eine Berührfläche zum Flansch gegenüber der Auflagefläche. Im Rahmen dieser Bedingung kann der konische Aufbau beliebig, wie beispielsweise trapezförmig, kegelförmig, halbrund, halbelliptisch oder eine Mischung daraus sein. Der konische Aufbau bewirkt eine weitere Erhöhung der lokalen Dichtwirkung, da an der Berührfläche zum Flansch das zu verpressende Volumen an Dichtmaterial und somit die gesamte Verpressung weiter verringert wird.

In einer zusätzlichen Weiterbildung weist die angegebene Steuerventildichtung einen Bereich auf, in dem die erste, zweite und dritte Dichtlippe parallel zueinander verlaufen. In diesem Bereich können die Druckluftkanäle sehr nah aneinander angenähert werden, so dass mit der angegebenen Steuerventildichtung selbst eine räumlich sehr kleine Flanschverbindung wirksam abgedichtet werden kann.

In einer noch anderen Weiterbildung der angegebenen Steuerventildichtung liegt die erste und/oder zweite Dichtlippe bündig entsprechend am ersten und/oder zweiten Druckluftkanal an, so dass die durch die Druckluftkanäle durchströmende Druckluft an den entsprechenden Dichtlippen minimal verwirbelt wird, so dass selbst mit einem geringen Querschnitt der Druckluftkanäle ein geringer pneumatischer Widerstand erreichbar ist.

In einer zusätzlichen Weiterbildung der angegebenen Steuerventildichtung sind die erste, zweite und dritte Dichtlippe über einen Steg zwischen dem ersten und zweiten Druckluftkanal geführt, der eine Breite des Steges aufweist, die zwischen 10% und 20%, vorzugsweise 15% einer maximalen Ausdehnung des Steges, des ersten Druckluftkanals und des zweiten Druckluftkanals liegt.

In einer anderen Weiterbildung der angegebenen Steuerventildichtung weisen die erste und dritte Dichtlippe und/oder die zweite und dritte Dichtlippe einen Abstand voneinander von mindestens 25% einer Breite einer der Dichtlippen auf. Auf diese Weise kann das Dichtmaterial beim Verpressen der Dichtlippen zwischen den Flanschen optimal in die Zwischenräume zwischen den Dichtlippen entweichen.

In einer alternativen Weiterbildung der angegebenen Steuerventildichtung ist auf einer Fläche des flächenförmigen Dichtungskörpers eine geschlossene vierte Dichtlippe und innerhalb der geschlossenen vierten Dichtlippe eine geschlossene fünfte Dichtlippe geführt, wobei die dritte Dichtlippe als Verstrebung der vierten und fünften Dichtlippe ausgebildet ist. Auf diese Weise werden durch die dritte bis fünfte Dichtlippe Druckkammern ausgebildet, die ein Entweichen der Druckluft in die Umgebung verhindern, wenn die erste und/oder zweite Dichtlippe beispielsweise verschmutzt und daher wirkungslos sind.

Gemäß einem weiteren Aspekt der Erfindung umfasst ein pneumatisches Steuerventil zum Ansteuern eines Bremszylinders mit einem Bremszylinderdruck basierend auf einem einstellbaren Hauptluftleitungsdruck:
- einen Tragekörper mit einer den Hauptluftleitungsdruck führenden Hauptluftleitung und einer den Bremszylinderdruck führenden Bremszylinderdruckleitung, und
- ein Hauptteil zum Verändern des Bremszylinderdruckes in der Bremszylinderdruckleitung basierend auf einer Veränderung des Hauptluftleitungsdruckes, das über eine Flanschverbindung am Tragekörper gehalten ist, die mit einer angegebenen Steuerventildichtung abgedichtet ist.

In einer Weiterbildung umfasst das angegebene pneumatische Steuerventil ein Leitungsteil zum Ausgeben eines Steuerdruckes basierend auf der Veränderung des Hauptluftleitungsdruckes, das über eine Flanschverbindung am Tragekörper gehalten ist, die mit einer angegebenen Steuerventildichtung abgedichtet ist, wobei das Hauptteil eingerichtet ist, den Bremszylinderdruck basierend auf dem Steuerdruck zu verändern

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine vereinfachtes Prinzipdiagramm eines beispielhaften Steuerventils,
Fig. 2 eine perspektivische Ansicht eines Hauptteils des Steuerventils aus Fig. 1,
Fig. 3 eine perspektivische Ansicht eines Trägers mit einem Leitungsteil des Steuerventils aus Fig. 1,
Fig. 4 eine perspektivische Ansicht einer Steuerventildichtung des Steuerventils aus Fig. 1,
Fig. 5 eine perspektivische Schnittansicht der Steuerventildichtung aus Fig. 4,
Fig. 6 eine vereinfachtes Prinzipdiagramm eines weiteren Steuerventils, und
Fig. 7 eine perspektivische Ansicht einer Steuerventildichtung des Steuerventils aus Fig. 6 zeigen.

In den Figuren werden gleiche technische Elemente mit gleichen Bezugszeichen versehen und nur einmal beschrieben.

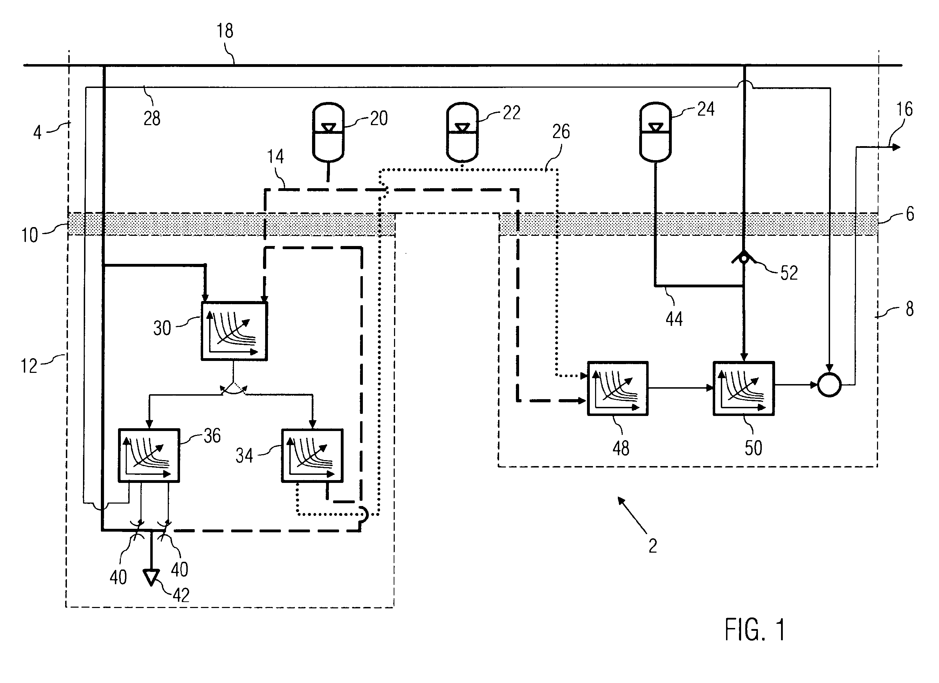

Es wird auf Fig. 1 Bezug genommen, die ein vereinfachtes Prinzipdiagramm eines beispielhaften pneumatisch betätigbaren Steuerventils 2 in einem nicht weiter dargestellten Schienenfahrzeug zum Ansteuern einer nicht weiter dargestellten Bremse des Schienenfahrzeugs zeigt. Es sei an dieser Stelle darauf hingewiesen, dass es eine Vielzahl verschieden funktionierender pneumatisch betätigbarer Steuerventile gibt, und dass der Einsatz der angegebenen Steuerventildichtung nicht auf das nachstehend beschriebene Steuerventil 2 eingeschränkt werden soll.

Ziel des Steuerventils 2 ist gleichzeitig aus einem einzigen von einem Fahrzeugführer des Schienenfahrzeuges vorgegebenen Hauptluftleitungsdruck 18 die Energie als auch die Information zum Betätigen aller Bremsen im oben genannte Schienenfahrzeug abzuleiten.

Das beispielhafte Steuerventil 2 weist dazu einen Tragekörper 4 auf, an dem über eine erste Steuerventildichtung 6 ein Hauptteil 8 und über eine zweite Steuerventildichtung 10 ein Leitungsteil 12 befestigt ist. Um das zuvor genannte Ziel zu verwirklichen, ist das Leitungsteil 12 dazu vorgesehen, basierend auf dem Hauptluftleitungsdruck 18 eine Information über die Betätigung der entsprechenden dem Steuerventil 2 zugeordneten Bremse in Form eines Steuerdruckes 14 abzuleiten. Demgegenüber ist das Hauptteil 8 dazu vorgesehen, unter Verwendung der Energie des Hauptluftleitungsdruckes 18 aus dem Steuerdruck 14 einen Bremszylinderdruck 16 zur Ansteuerung der oben genannten Bremse zu erzeugen. Dieser Ansatz soll nachstehend näher erläutert werden. Zur besseren Unterscheidbarkeit der Drücke ist der Steuerdruck 14 in Fig. 1 mit einer dicken gestrichelten Linie angedeutet, während der Hauptluftleitungsdruck 18 in Fig. 1 mit einer dicken durchgezogenen Linie angedeutet ist.

Der Hauptluftleitungsdruck 18 wird an alle Bremsen des oben genannten Schienenfahrzeuges gleichzeitig angelegt und daher an einer Stelle in den Tragekörper 4 hinein und an einer anderen Stelle aus dem Tragekörper 4 hinaus geführt.

Ein Steuerkammerdruckspeicher 20, ein Referenzspeicher 22 und ein Versorgungsspeicher 24 im Trägerteil 4 sind zur Stabilisierung des Steuerdruckes 14 und anderer Drücke im Steuerventil 2 vorgesehen.

Zur Ableitung der Bremsbetätigungsinformation aus dem Hauptluftleitungsdruck 18 kann das Leitungsteil 12 mit dem Tragekörper 4 über die zweite Steuerventildichtung 10 den Steuerdruck 14, den Hauptluftleitungsdruck 18, einen Referenzdruck 26 und einen Vorsteuerdruck 28 austauschen. In Fig. 1 ist der Referenzdruck 26 zur besseren Erkennbarkeit mit einer dicken gepunkteten Linie dargestellt. Durch die zweite Steuerventildichtung 10 sind somit entsprechend vier pneumatische Kanäle geführt. Im Inneren weist das Leitungsteil 12 einen Hauptkolben 30 zum Vergleich des Steuerdruckes 14 und des Hauptluftleitungsdruckes 18 sowie einen Betriebsbremsbeschleuniger 32 zum Nachführen des Steuerdruckes 14 basierend auf dem Hauptluftleitungsdruck 18 im Bremsfall und Füllventile 34 zum Nachführen des Steuerdruckes 14 basierend auf dem Hauptluftleitungsdruck 18 im Bremslösefall auf.

Im Normalbetrieb des oben genannten Schienenfahrzeuges, das heißt, wenn die Bremsen weder angezogen noch gelöst werden, sollen der Steuerdruck 14 und der Hauptleitungsdruck 18 gleich groß sein.

Werden die Bremsen gelöst, erkennt das der Hauptkolben 30 in einer dem Fachmann bekannten Weise daran, dass der Hauptleitungsdruck 18 größer als der Steuerdruck 14 ist, woraufhin die Füllventile 34 aktiviert werden, die daraufhin den Steuerdruck 14 und den Referenzdruck 26 erhöhen und an den Hauptleitungsdruck 18 in einer dem Fachmann bekannten Weise anpassen. Ein entsprechend notwendiger Anschluss des Hauptluftleitungsdruckes 18 an die Füllventile 34 ist in der vorliegenden Ausführung der Übersichtlichkeit halber nicht dargestellt. Gleichzeitig werden der Steuerspeicher 20 und der Referenzspeicher 22 gefüllt. Auf diese Weise wird der oben genannte Zustand des Steuerventils 2 für den Normalbetrieb erreicht.

Werden die Bremsen angezogen, erkennt das der Hauptkolben 30 in einer dem Fachmann bekannten Weise daran, dass der Hauptluftleitungsdruck 18 kleiner als der Steuerdruck 14 ist, woraufhin der Betriebsbremsbeschleuniger 36 aktiviert wird. Der Betriebsbremsbeschleuniger 36 soll einerseits den Abfall des Hauptluftleitungsdruckes 18 möglichst schnell an vom Fahrzeugführer des Schienenfahrzeuges aus betrachtet nachfolgenden Steuerventilen weiterleiten. Dazu entlüftet der Betriebsbremsbeschleuniger 36 über einen Hahn 40 den Hauptleitungsdruck 18 gegenüber Umgebungsdruck 42. Andererseits soll der Betriebsbremsbeschleuniger 36 den Steuerdruck 14 zum Ansteuern des Hauptteils 8 erzeugen, wozu es den Steuerdruck 14 in der vorliegenden Ausführung über einen weiteren Hahn 40 mit dem Hauptleitungsdruck 18 verbindet, so dass der Steuerdruck 14 dem Hauptleitungsdruck 18 folgt. Dazu öffnet der Betriebsbremsbeschleuniger 36 einen weiteren Hahn 40, der den Steuerdruck 14 mit dem Hauptleitungsdruck 18 verbindet, so dass beide Drücke 14, 18 ausgeglichen werden. Der von den Füllventilen 34 hergestellte Referenzdruck 26 wird demgegenüber von vom Betriebsbremsbeschleuniger 36 nicht verändert. Weiter gibt der Betriebsbremsbeschleuniger 36 noch den Vorsteuerdruck 28 aus, auf dessen Erzeugung der Kürze halber nicht näher eingegangen werden soll.

Somit steckt die aus dem Hauptluftleitungsdruck 18 abgeleitete Bremsbetätigungsinformation für die vom Steuerventil 2 zu betätigende Bremse in einer nicht weiter zu erläuternden Weise in einem Druckunterschied zwischen dem Referenzdruck 26 und dem Steuerdruck 14. Weitere Informationen dazu können dem eingangs genannten Stand der Technik entnommen werden.

Das Hauptteil 8 steuert basierend auf der aus dem Hauptluftleitungsdruck 18 abgeleiteten Bremsbetätigungsinformation die Bremse an. Dazu tauscht das Hauptteil 8 über die erste Steuerventildichtung 6 mit dem Trägerteil 4 den Steuerdruck 14, den Hauptluftleitungsdruck 18, den Referenzdruck 26, den Vorsteuerdruck 28, einen noch zu beschreibenden Versorgungskammerdruck 44 und den Bremszylinderdruck 16 zur Ansteuerung der dem Steuerventil 2 zugeordneten Bremse aus.

Das Hauptteil 8 weist einen Vorsteuerkreis 48 und einen Bremsdruckregelkreis 50 auf.

Der Vorsteuerkreis 48 empfängt den Steuerdruck 14 und den Referenzdruck 26 und stellt den oben genannten Druckunterschied zwischen dem Referenzdruck 26 und dem Steuerdruck 14 fest. Dieser Druckunterschied wird durch das Leitungsteil 12 beim Anziehen der Bremse über den Betriebsbremsbeschleuniger 36 vergrößert und beim Lösen der Bremse über die Füllventile 34 verkleinert.

Basierend auf einem nicht näher referenzierten Signal aus dem Vorsteuerkreis 48, das vom zuvor genannten Druckunterschied abhängig ist, erzeugt der Regelkreis 50 unter Zuhilfenahme der Energie aus dem Hauptluftleitungsdruck 18 den Bremszylinderdruck 16. Da der Hauptluftleitungsdruck 18 vom Fahrzeugführer beim Bremsen abgesenkt wird, wird er zur Speicherung der Energie über ein Rückschlagventil 52 im Versorgungsspeicher 24 zwischengespeichert. Somit liegt am Regelkreis 50 ein Versorgungskammerdruck 44 zur Erzeugung des Bremszylinderdruckes 16 an, der nur dann gleich dem Hauptluftleitungsdruck 18 ist, wenn die vom Steuerventil 2 anzusteuernde Bremse nicht betätigt wird.

Zu einer detaillierten Darstellung der Funktionsweise des Regelkreises 50 wird auf den eingangs genannten Stand der Technik verwiesen.

Der Regelkreis 50 erzeugt den Bremszylinderdruck 16 prinzipbedingt mit einer gewissen Totzeit. Zur Verkürzung dieser Totzeit wird auf den Bremszylinderdruck 16 der Vorsteuerdruck 28 in einer dem Fachmann bekannten Weise aufgeschaltet.

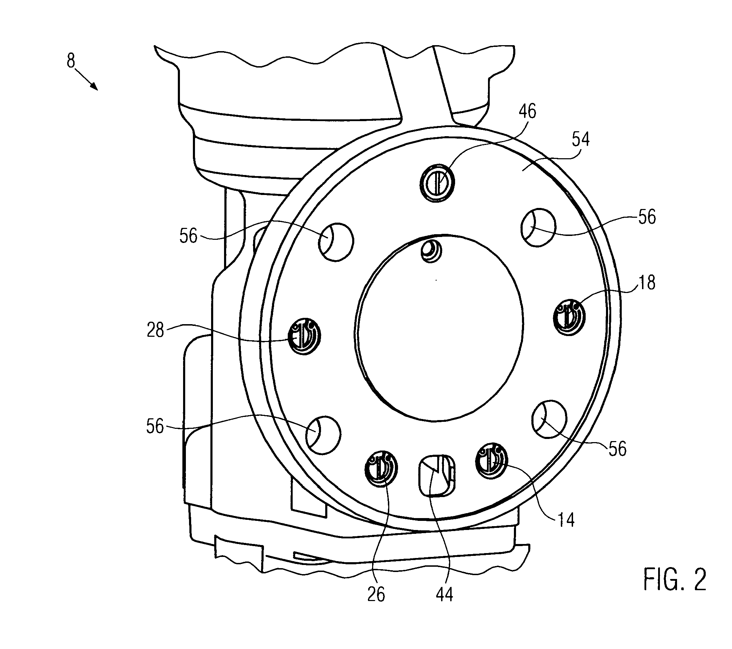

Es wird auf Fig. 2 Bezug genommen, die eine perspektivische Ansicht des Hauptteils 8 des Steuerventils 2 aus Fig. 1 zeigt.

Das Hauptteil 8 weist an seiner Rückseite einen Flansch 54 auf, der am Tragekörper 4 in einer noch zu beschreibenden Weise befestigt werden kann. Den Flansch 54 durchdringen axial Befestigungsbohrungen 56, durch die Befestigungsmittel, wie beispielsweise Schrauben geführt werden können, um das Hauptteil 8 am Tragekörper 4 zu fixieren.

Durch den Flansch 54 sind ebenfalls die Druckluftleitungen geführt, die den Steuerdruck 14, den Hauptluftleitungsdruck 18, den Referenzdruck 26, den Vorsteuerdruck 28, den Versorgungskammerdruck 44 und den Bremszylinderdruck 16 führen. Die Anordnung der einzelnen Druckluftleitungen in Fig. 2 ist applikationsabhängig und daher nur beispielhaft zu sehen.

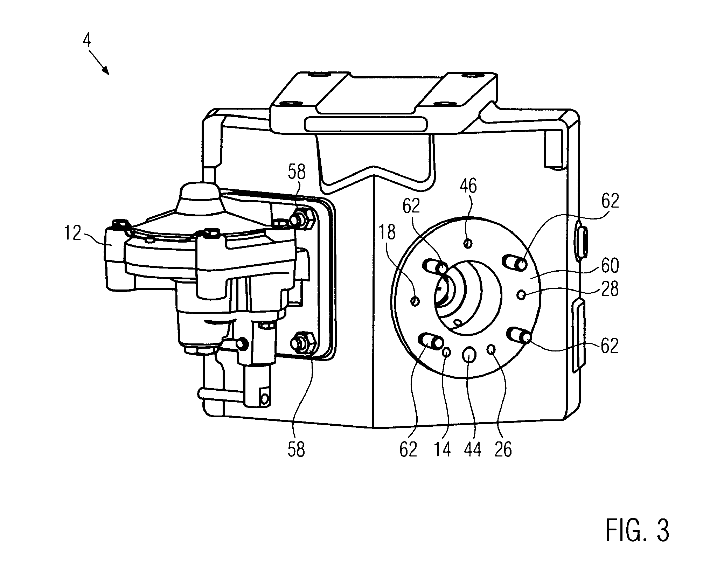

Es wird auf Fig. 3 Bezug genommen, die eine perspektivische Ansicht des Tragekörpers 4 des Steuerventils 2 aus Fig. 1 zeigt. An dem Tragekörper 4 ist das Leitungsteil 12 bereits mittels Muttern 58 befestigt. Die Muttern 58 erzeugen eine Andruckkraft, mit dem das Leitungsteil 12 gegen den Tragekörper 4 gedrückt wird.

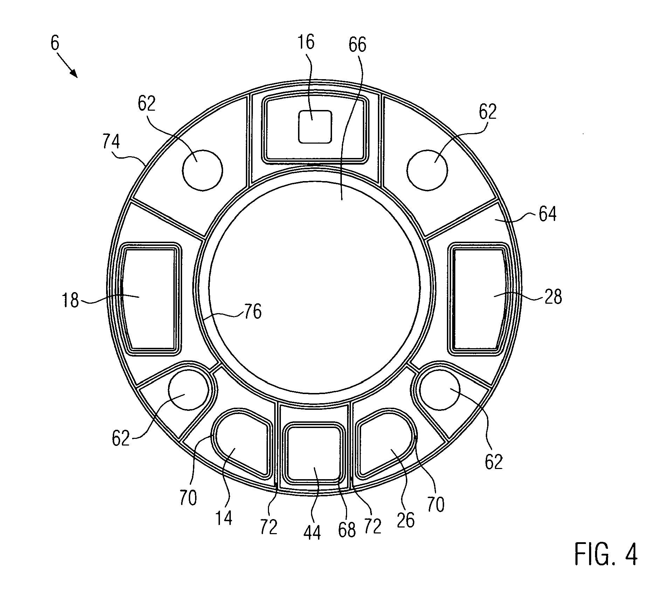

An der Stelle des Tragekörpers 4, an dem das Hauptteil 8 befestigt werden soll, ist ein weiterer Flansch 60 ausgebildet, der den Flansch 54 des Hauptteils 8 formschlüssig aufnimmt. Durch den weiteren Flansch 60 sind ebenfalls die Druckluftleitungen geführt, die den Steuerdruck 14, den Hauptluftleitungsdruck 18, den Referenzdruck 26, den Vorsteuerdruck 28, den Versorgungskammerdruck 44 und den Bremszylinderdruck 16 führen. Vom weiteren Flansch 60 ragen ferner Gewinde 62 ab, die in den Befestigungsbohrungen 56 am Flansch 54 aufgenommen und auf die die Muttern 58 aufgeschraubt werden können. Werden der Flansch 54 und der weitere Flansch 60 formschlüssig aufeinandergelegt und die Gewinde 62 in den Befestigungsbohrungen 56 aufgenommen, liegen die Druckluftleitungen zum Führen der oben genannten Drücke so aufeinander, dass die einzelnen Drücke entsprechend zwischen dem Tragekörper 4 und dem Hauptteil 8 geführt werden können. Damit aus den Druckluftleitungen an dieser Flanschverbindung keine Druckluft entweicht, wird zwischen den Flanschen 54, 60 die in Fig. 1 gezeigte erste Steuerventildichtung 6 aufgenommen, auf die in Fig. 4 näher eingegangen werden soll.

Wie in Fig. 4 zu sehen, umfasst die Steuerventildichtung 6 einen Grundkörper 64, auf dem noch zu beschreibende Dichtlippen ausgebildet sind.

Der Grundkörper 64 ist als kreisförmige Scheibe ausgebildet, durch die mittig eine Durchgangsöffnung 66 geführt ist. Der Grundkörper 64 kann aus einem elastischen Material wie einem Kautschuk bestehen, der als Synthesekautschuk in Form eines Nitrilkautschuks, insbesondere eines Nitril-Butadien-Kautschuks ausgebildet sein kann.

Eine erste Dichtlippe 68 umfänglich um den Druckkanal gelegt, der den Versorgungskammerdruck 44 leitet. Zwei zweite Dichtlippen 70 sind umfänglich um die Druckkanäle gelegt, die entsprechend den Steuerdruck 14 und den Referenzdruck 26 führen. Dritte Dichtlippen 72 sind als zwischen der ersten und den zweiten Dichtlippen 68, 70 geführt, auf die später noch eingegangen wird. Ferner ist eine vierte Dichtlippe 74 umfänglich um den Außenumfang des kreisförmigen Grundkörpers 64 und eine fünfte Dichtlippe 76 umfänglich um den Umfang der Durchgangsöffnung 68 des kreisförmigen Grundkörpers 64 gelegt. Dabei werden die vierte und fünfte Dichtlippe 74, 76 durch die dritten Dichtlippen 72 und weitere nicht näher referenzierte Dichtlippen radial miteinander verbunden. Neben den zuvor genannten Druckkanälen sind auch die restlichen Druckluft führenden Druckluftkanäle von nicht näher referenzierten Dichtlippen umgeben.

Dieses Dichtlippenbild ist in der vorliegenden Ausführung auf beiden Seiten der als kreisförmige Scheibe ausgebildeten Grundkörper 64 spiegelverkehrt aufgetragen, so dass die Dichtlippen 68 bis 76 auf beiden Seiten des Grundkörpers 64 axial aufeinander liegen. Wird die Steuerventildichtung 6 daher zwischen den beiden Flanschen 54, 60 aufgenommen und die Flansche 54, 60 über die Muttern 58 und die Gewinde 62 gegeneinander gedrückt, dann wirkt die durch die Schraubverbindung erzeugte Andruckkraft ausschließlich auf die axial übereinander liegenden Dichtlippen 66. Dies hat den Vorteil, dass ein flächiger Schluss der Dichtlippen 68 bis 76 mit den Flanschen 54, 60 mit weniger Andruckkraft hergestellt werden kann, als wenn der gesamte Grundkörper 64 auf die Flansche 54, 60 gedrückt werden würde. Auf diese Weise wird die mechanische Belastung auf die Gewinde 52 und die Muttern 58 reduziert, da diese weniger Zugkraft zum Zusammenpressen der Flansche 54, 60 aufnehmen müssen.

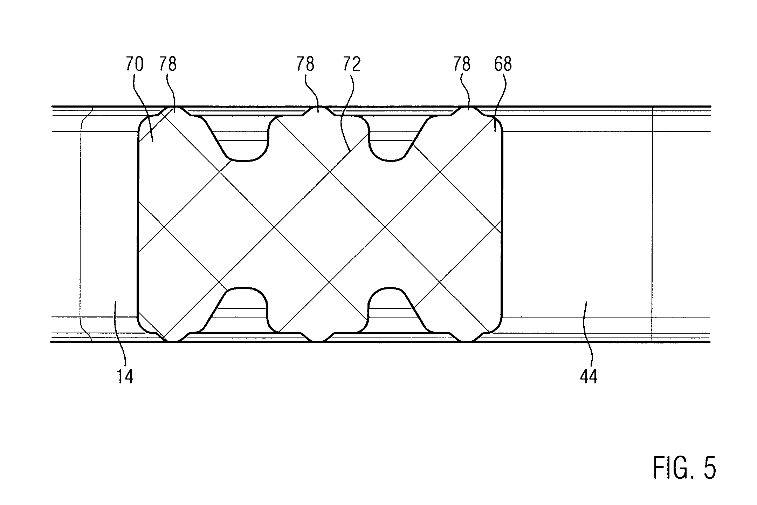

Es wird auf Fig. 5 Bezug genommen, die eine perspektivische Schnittansicht der Steuerventildichtung 6 aus Fig. 4 zeigt.

Wie aus Fig. 5 ersichtlich, weisen die erste und zweite Dichtlippe 68, 70 im Querschnitt die Struktur eines rechwinkligen Trapez auf, wobei der rechtwinklig zwischen den Grundseiten verlaufende Schenkel der Trapeze zu den Druckluftkanälen gerichtet ist. Auf diese Weise werden die erste und zweite Dichtlippe 68, 70 nach Art eines Rückschlagventils ausgebildet, dessen Dichtwirkung nach Andrücken des entsprechenden Flansches 54, 60 auf die erste und zweite Dichtlippe 68, 70 durch die Drücke 14, 44 in den Druckkanäle unterstützt wird.

Demgegenüber ist die dritte Dichtlippe 72 derart ausgebildet, dass ihre Dichtwirkung in beide Richtungen gleich gut ist und somit keine Vorzugswirkung hat. Auf diese Weise kann die dritte Dichtlippe 72 als Notdichtlippe wirken, wenn die erste und/oder zweite Dichtlippe 68, 70 beispielsweise durch Verschmutzungen oder Fertigungsfehlern wirkungslos sind.

Auf allen Dichtlippen 68 bis 76 der Steuerventildichtung 6 können axial zum Grundkörper 64 gesehen Zusatzdichtlippen 78 aufgesetzt sein, die in kleinere Unebenheiten auf den Flanschen 54, 60 wie Kratzer gedrückt werden können, um diese auszugleichen.

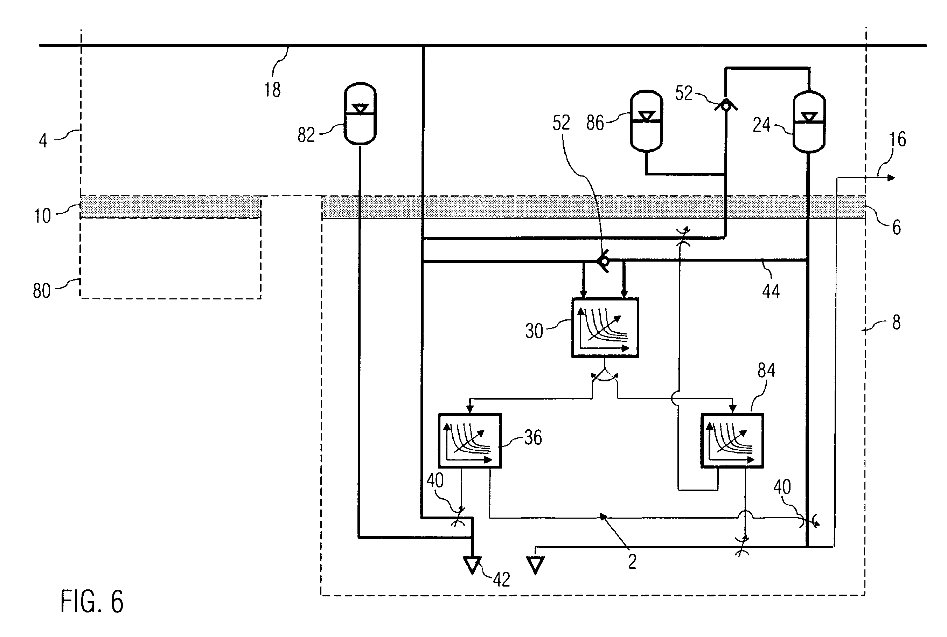

Es wird auf Fig. 6 Bezug genommen, die ein vereinfachtes Prinzipdiagramm eines alternativen Steuerventils 2 zeigt.

Das alternative Steuerventil 2 weist einen Tragekörper 4 auf, an dem das Hauptteil 8 über die erste Steuerventildichtung 6 befestigt ist. Weiter weist das alternative Steuerventil 2 ein Notbremsteil 80 auf, das über die zweite Steuerventildichtung 10 am Tragekörper 4 befestigt ist. Für den normalen Bremsbetrieb ist das Notbremsteil 80 nicht notwendig, weshalb auf eine detaillierte Darstellung nachstehend verzichtet werden soll.

Anders als im Steuerventil 2 der Fig. 1 wird im vorliegenden alternativen Steuerventil 2 der Bremszylinderdruck 16 im Hauptteil 8 direkt aus dem Hauptluftleitungsdruck 18 abgeleitet. Dazu ist der Hauptkolben 30 im Hauptteil 8 angeordnet. Der Hauptkolben 30 stellt den Hauptluftleitungsdruck 18 dem Versorgungskammerdruck 44 gegenüber und stellt Differenzen zwischen diesen beiden Drücken 18, 44 fest.

Ist der Hauptluftleitungsdruck 18 kleiner als der Versorgungskammerdruck 44, dann hat der Führer des nicht gezeigten Schienenfahrzeuges wie im Rahmen der Fig. 1 erläutert eine Bremsung eingeleitet. Der nun im Hauptteil 8 angeordnete Betriebsbremsbeschleuniger 36 entlüftet wieder die den Hauptluftleitungsdruck 18 führende Hauptluftleitung über einen Hahn 40, legt jedoch gleichzeitig den Versorgungskammerdruck 44 über einen weiteren Hahn 40 als Bremszylinderdruck 16 direkt an den Bremszylinder an.

Wie bereits diskutiert, hat die Entlüftung der den Hauptluftleitungsdruck 18 führenden Hauptluftleitung den Hintergrund, dass auf das Steuerventil 2 nachfolgenden Steuerventile im nicht gezeigten Schienenfahrzeug möglichst zeitnah über die eingeleitete Bremsung benachrichtigt werden sollen. Dazu sollte jedoch anfänglich ein möglichst hoher stoßartiger Druckabfall erfolgen, der anschließend nur langsam weitergeführt wird. Dies wird durch einen ein Impulsvolumen aufbauenden Impulsspeicher 82 erreicht, der nach dem entlüftenden Hahn 40 parallel zum Umgebungsdruck 42 geschaltet ist. Der Impulsspeicher 82 ist im Normalbetrieb mit dem Umgebungsdruck 42 gefüllt. Mit der Entlüftung wird der Hauptluftleitungsdruck 18 nicht nur in Richtung des Umgebungsdruckes 42 sondern auch in den Impulsspeicher 82 geleitet, bis dieser gefüllt ist. Danach wird der Hauptluftleitungsdruck 18 nur noch in Richtung des Umgebungsdruckes 42 entlüftet.

Ist der Hauptluftleitungsdruck 18 jedoch größer als der Versorgungskammerdruck 44, dann hat der Führer des nicht gezeigten Schienenfahrzeuges wie im Rahmen der Fig. 1 erläutert die Bremsung beendet, und die Bremsen sollen gelöst werden.

In der vorliegenden Ausführung wird der Bremszylinderdruck 16 dazu von einer Löseeinrichtung 84 über einen Hahn 40 an den Umgebungsdruck 42 angeglichen, und die mit dem Bremszylinderdruck 16 betätigten Bremszylinder entlüftet. Es sei an dieser Stelle darauf hingewiesen, das beim beenden der Bremsung der Betriebsbremsbeschleuniger 36 inaktiv und damit alle vom Betriebsbremsbeschleuniger kontrollierten Hähne 40 geschlossen sind.

Zur möglichst zeitnahen Weitergabe der Information über das beendete Bremsen an auf das Steuerventil 2 folgende Steuerventile im nicht näher dargestellten Schienenfahrzeug, ist in der vorliegenden Ausführung ein Lösebeschleunigungsspeicher 86 vorgesehen. Der Lösebeschleunigungsspeicher 86 wird seriell zum Versorgungsspeicher 24 gefüllt, das heißt, dass zunächst der Versorgungsspeicher 24 gefüllt wird, der dann wiederum den Lösebeschleunigungsspeicher 86 füllt. Zum Ende der Bremsung legt die Löseeinrichtung 84 den Lösebeschleunigungsspeicher 86 dann über einen weiteren Hahn 52 an den Hauptleitungsdruck 18 an und erhöht diesen so impulsartig, was dann wiederum von nachfolgenden Steuerventilen zum Beenden des Bremsens detektiert werden kann.

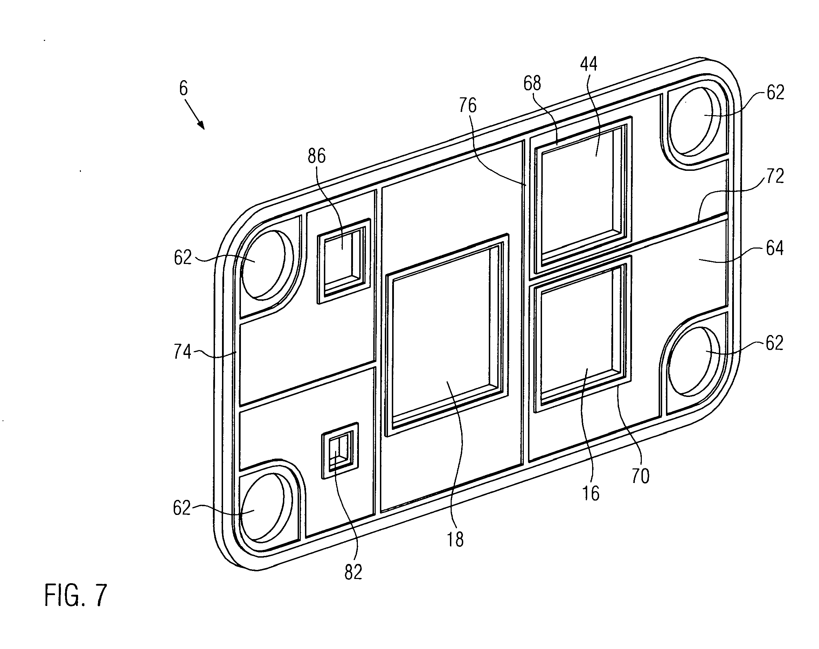

Es wird auf Fig. 7 Bezug genommen, die eine perspektivische Ansicht der Steuerventildichtung 6 des weiteren Steuerventils aus Fig. 6 zeigt.

In der Steuerventildichtung der Fig. 7 ist der den Versorgungskammerdruck 44 führende Druckkanal wieder von der ersten Dichtlippe 68 umgeben. Als zweite Dichtlippe 70 soll die Dichtlippe betrachtet werden, die den den Bremszylinderdruck führenden Druckkanal umgibt. Die dritte Dichtlippe 72 liegt in der vorliegenden Ausführung wieder zwischen der ersten und zweiten Dichtlippe.

Auf die drei Dichtlippen 68 bis 72 sollen nachstehend dieselben technischen Merkmale angewendet werden, die auf die drei Dichtlippen 68 bis 72 in den Fig. 4 bis 5 angewendet wurden.

Auf die verbleibenden, nicht mit einem Bezugszeichen versehenen Dichtlippen in Fig. 7 können diese technischen Merkmale ebenfalls angewendet werden.

Ferner verlaufen in Fig. 7 die vierte Dichtlippe 74 und die fünfte Dichtlippe 76 bereichsweise zusammen.

## Patentansprüche

1. Steuerventildichtung (6) zum Abdichten einer Flanschverbindung zwischen einem an einem Tragekörper (4) ausgebildeten Flansch (54) und einem an einer Steuerventilkomponente (8, 12) ausgebildeten Flansch (60), umfassend
- einen flächenförmig ausgebildeten Dichtungskörper (64) zur Aufnahme zwischen den beiden Flanschen (54, 60),
- einen durch den Dichtungskörper (64) geführten ersten Druckluftkanal (44) zum Leiten von Druckluft zwischen den beiden Flanschen (54, 60), der von einer auf dem Dichtungskörper (64) getragenen ersten Dichtlippe (68) umfänglich umgeben ist,
- einen durch den Dichtungskörper (64) geführten zweiten Druckluftkanal (14, 16, 26) zum Leiten von Druckluft zwischen den beiden Flanschen (54, 60), der von einer auf dem Dichtungskörper (64) getragenen zweiten Dichtlippe (70) umfänglich umgeben ist, **dadurch gekennzeichnet, dass**
- eine dritte Dichtlippe (72), die auf dem Dichtungskörper (64) zwischen der ersten Dichtlippe (68) und der zweiten Dichtlippe (70) ausgebildet ist.

2. Steuerventildichtung (6) nach Anspruch 1, wobei die erste Dichtlippe (68) nach Art einer in den ersten Druckluftkanal (44) gerichteten Rückschlagklappe und/oder die zweite Dichtlippe (70) nach Art einer in den zweiten Druckluftkanal (14, 16, 26) gerichteten Rückschlagklappe ausgebildet sind.

3. Steuerventildichtung (6) nach Anspruch 1 oder 2, wobei die dritte Dichtlippe (72) zwischen der ersten und zweiten Dichtlippe (68, 70) normal zum flächenförmigen Dichtungskörper (64) ausgerichtet ist.

4. Steuerventildichtung (6) nach einem der vorstehenden Ansprüche, wobei ein Querschnitt der ersten Dichtlippe (68) und/oder der zweiten Dichtlippe (70) und/oder der dritten Dichtlippe (72) vom Dichtungskörper (64) aus gesehen konisch zulaufend ist.

5. Steuerventildichtung (6) nach einem der vorstehenden Ansprüche, umfassend einen Bereich, in dem die erste, zweite und dritte Dichtlippe (68, 70, 72) parallel zueinander verlaufen.

6. Steuerventildichtung (6) nach einem der vorstehenden Ansprüche, wobei die erste und/oder zweite Dichtlippe (68, 70) bündig entsprechend am ersten und/oder zweiten Druckluftkanal (44, 14, 16, 26) anliegt.

7. Steuerventildichtung (6) nach einem der vorstehenden Ansprüche, wobei die erste, zweite und dritte Dichtlippe (68, 70, 72) über einen Steg zwischen dem ersten und zweiten Druckluftkanal (44, 14, 16, 26) geführt sind, der eine Breite des Steges aufweist, die zwischen 10% und 20%, vorzugsweise 15% einer maximalen Ausdehnung des Steges, des ersten Druckluftkanals (44) und des zweiten Druckluftkanals (14, 16, 26) liegt.

8. Steuerventildichtung (6) nach einem der vorstehenden Ansprüche, wobei die erste und dritte Dichtlippe (68, 72) und/oder die zweite und dritte Dichtlippe (70, 72) einen Abstand voneinander Aufweisen, der zwischen 25% und 100% einer Breite einer der Dichtlippen (68, 70, 72) liegt.

9. Steuerventildichtung (6) nach einem der vorstehenden Ansprüche, wobei auf einer Fläche des flächenförmigen Dichtungskörpers (64) eine geschlossene vierte Dichtlippe (74) und innerhalb der geschlossenen vierten Dichtlippe (74) eine geschlossene fünfte Dichtlippe (76) geführt ist, und wobei die dritte Dichtlippe (72) als Verstrebung der vierten und fünften Dichtlippe (74, 76) ausgebildet ist.

10. Pneumatisches Steuerventil (2) zum Ansteuern eines Bremszylinders mit einem Bremszylinderdruck (64) basierend auf einem einstellbaren Hauptluftleitungsdruck (18) umfassend:
- einen Tragekörper (4) mit einer den Hauptluftleitungsdruck (18) führenden Hauptluftleitung und einer den Bremszylinderdruck (64) führenden Bremszylinderdruckleitung, und
- ein Hauptteil (8) zum Verändern des Bremszylinderdruckes (16) in der Bremszylinderdruckleitung basierend auf einer Veränderung des Hauptluftleitungsdruckes (18), das über eine Flanschverbindung (54, 60) am Tragekörper (4) gehalten ist, die mit einer Steuerventildichtung (6) nach einem der vorstehenden Ansprüche abgedichtet ist.

11. Pneumatisches Steuerventil (2) nach Anspruch 10, umfassend ein Leitungsteil (12) zum Ausgeben eines Steuerdruckes (14) basierend auf der Veränderung des Hauptluftleitungsdruckes (18), das über eine Flanschverbindung (54, 60) am Tragekörper (4) gehalten ist, die mit einer Steuerventildichtung (6) nach einem der vorstehenden Ansprüche abgedichtet ist, wobei das Hauptteil (8) eingerichtet ist, den Bremszylinderdruck (16) basierend auf dem Steuerdruck zu verändern.

## Claims

1. Control valve seal (6) for sealing a flanged joint between a flange (54) which is formed on a supporting body (4) and a flange (60) which is formed on a control valve component (8, 12), comprising
- a seal body (64) of laminar configuration for being received between the two flanges (54, 60),
- a first compressed air duct (44) which is guided through the seal body (64) for guiding compressed air between the two flanges (54, 60), which first compressed air duct (44) is surrounded circumferentially by a first sealing lip (68) which is supported on the seal body (64),
- a second compressed air duct (14, 16, 26) which is guided through the seal body (64) for guiding compressed air between the two flanges (54, 60), which second compressed air duct (14, 16, 26) is surrounded circumferentially by a second sealing lip (70) which is supported on the seal body (64), **characterized in that**
- a third sealing lip (72) which is formed on the seal body (64) between the first sealing lip (68) and the second sealing lip (70).

2. Control valve seal (6) according to Claim 1, the first sealing lip (68) being configured in the manner of a non-return flap which is directed into the first compressed air duct (44) and/or the second sealing lip (70) being configured in the manner of a non-return flap which is directed into the second compressed air duct (14, 16, 26).

3. Control valve seal (6) according to Claim 1 or 2, the third sealing lip (72) being oriented in a normal manner with respect to the laminar seal body (64) between the first and second sealing lips (68, 70).

4. Control valve seal (6) according to one of the preceding claims, a cross section of the first sealing lip (68) and/or the second sealing lip (70) and/or the third sealing lip (72) tapering conically as viewed from the seal body (64).

5. Control valve seal (6) according to one of the preceding claims, comprising a region, in which the first, second and third sealing lips (68, 70, 72) run parallel to one another.

6. Control valve seal (6) according to one of the preceding claims, the first and/or second sealing lip (68, 70) bearing in a flush manner correspondingly on the first and/or second compressed air duct (44, 14, 16, 26).

7. Control valve seal (6) according to one of the preceding claims, the first, second and third sealing lips (68, 70, 72) being guided via a web between the first and second compressed air ducts (44, 14, 16, 26), which web has a width of the web which lies between 10% and 20%, preferably 15% of a maximum extent of the web, of the first compressed air duct (44) and the second compressed air duct (14, 16, 26).

8. Control valve seal (6) according to one of the preceding claims, the first and third sealing lips (68, 72) and/or the second and third sealing lips (70, 72) being at a spacing from one another which lies between 25% and 100% of a width of one of the sealing lips (68, 70, 72).

9. Control valve seal (6) according to one of the preceding claims, a closed fourth sealing lip (74) being guided on a surface of the laminar seal body (64) and a closed fifth sealing lip (76) being guided within the closed fourth sealing lip (74), and the third sealing lip (72) being configured as a strut of the fourth and fifth sealing lips (74, 76).

10. Pneumatic control valve (2) for actuating a brake cylinder with a brake cylinder pressure (64) based on an adjustable main air line pressure (18) comprising:
- a supporting body (4) having a main air line which conducts the main air line pressure (18) and a brake cylinder pressure line which conducts the brake cylinder pressure (64), and
- a main part (8) for changing the brake cylinder pressure (16) in the brake cylinder pressure line based on a change in the main air line pressure (18), which main part (8) is held on the supporting body (4) via a flanged joint (54, 60) which is sealed by way of a control valve seal (6) according to one of the preceding claims.

11. Pneumatic control valve (2) according to Claim 10, comprising a line part (12) for outputting a control pressure (14) based on the change in the main air line pressure (18), which line part (12) is held on the supporting body (4) via a flanged joint (54, 60) which is sealed by way of a control valve seal (6) according to one of the preceding claims, the main part (8) being set up to change the brake cylinder pressure (16) based on the control pressure.

## Revendications

1. Joint (6) de soupape de commande pour rendre étanche une liaison bridée entre une bride (54) constituée sur un corps (4) de support et une bride (60) constituée sur un élément (8, 12) de soupape de commande, comprenant :
- un corps (64) de joint de forme plate, à recevoir entre les deux brides (54, 60),
- un premier canal (44) pour de l'air comprimé, traversant le corps (64) de joint pour conduire de l'air comprimé entre les deux brides (54, 60), qui est entouré périphériquement d'une première lèvre (68) d'étanchéité portée sur le corps (64) de joint,
- un deuxième canal (14, 16, 26) pour de l'air comprimé, traversant le corps (64) du joint pour guider de l'air comprimé entre les deux brides (54, 60), qui est entouré périphériquement par une deuxième lèvre (70) d'étanchéité portée sur le corps (64) du joint,
**caractérisé en ce que**
- il est constitué une troisième lèvre (72) d'étanchéité sur le corps (64) du joint entre la première lèvre (68) d'étanchéité et la deuxième lèvre (70) d'étanchéité.

2. Joint (6) de soupape de commande suivant la revendication 1, dans lequel la première lèvre (68) d'étanchéité est constituée à la manière d'un clapet antiretour dirigé dans le premier canal (44) pour de l'air comprimé et/ou la deuxième lèvre (70) d'étanchéité est constituée à la manière d'un clapet antiretour dirigé dans le deuxième canal (14, 16, 26) pour de l'air comprimé.

3. Joint (6) de soupape de commande suivant la revendication 1 ou 2, dans lequel la troisième lèvre (72) d'étanchéité est, entre la première et la deuxième lèvres (68, 70) d'étanchéité, dirigée normalement au corps (64) de joint de forme plate.

4. Joint (6) de soupape de commande suivant l'une des revendications précédentes, dans lequel une section transversale de la première lèvre (68) d'étanchéité et/ou de la deuxième lèvre (70) d'étanchéité et/ou de la troisième lèvre (72) d'étanchéité arrive coniquement, considéré à partir du corps (64) du joint.

5. Joint (6) de soupape de commande suivant l'une des revendications précédentes, comprenant une partie, dans laquelle les première, deuxième et troisième lèvres (68, 70, 72) d'étanchéité s'étendent parallèlement les unes aux autres.

6. Joint (6) de soupape de commande suivant l'une des revendications précédentes, dans lequel la première et/ou la deuxième (68, 70) lèvres d'étanchéité s'appliquent chacune à affleurement au premier et/ou au deuxième canal (44, 14, 16, 26) pour de l'air comprimé.

7. Joint (6) de soupape de commande suivant l'une des revendications précédentes, dans lequel les première, deuxième et troisième lèvres (68, 70, 72) d'étanchéité sont guidées entre le premier et le deuxième canal (44, 14, 16, 26) pour de l'air comprimé par une nervure d'une largeur représentant 10% et 20%, de préférence 15%, d'une étendue maximum de la nervure, du premier canal (44) pour de l'air canal et du deuxième canal (14, 16, 26) pour de l'air comprimé.

8. Joint (6) de soupape de commande suivant l'une des revendications précédentes, dans lequel la première et la troisième lèvres (68, 72) d'étanchéité et/ou la deuxième et la troisième lèvres (70, 72) d'étanchéité sont à une distance l'une de l'autre, qui représente entre 25% et 100% d'une largeur de l'une des lèvres (68, 70, 72) d'étanchéité.

9. Joint (6) de soupape de commande suivant l'une des revendications précédentes, dans lequel, sur une surface du corps (64) de joint de forme plate, est guidée une quatrième lèvre (74) d'étanchéité fermée et, à l'intérieur de la quatrième lèvre (74) d'étanchéité fermée, une cinquième lèvre (76) d'étanchéité fermée, la troisième lèvre (72) d'étanchéité étant constituée sous la forme d'une entretoise des quatrième et cinquième lèvres (74, 76) d'étanchéité.

10. Soupape (2) de commande pneumatique pour la commande d'un cylindre de frein par une pression (64) de cylindre de frein sur la base d'une pression (18) réglable de conduit principal pour de l'air, comprenant :
- un corps (4) de support ayant un conduit principal pour de l'air conduisant la pression (18) de conduit principal pour de l'air et un conduit de pression de cylindre de frein conduisant la pression (64) de cylindre de frein et
- une partie (8) principale pour modifier la pression (16) de cylindre de frein dans le conduit de pression de cylindre de frein sur la base d'une modification de la pression (18) de cylindre principal pour de l'air, qui est retenue au corps (4) de support par une liaison (54, 60) par bride rendue étanche par un joint (6) de soupape de commande suivant l'une des revendications précédentes.

11. Soupape (2) de commande pneumatique suivant la revendication 10, comprenant une partie (12) de conduit pour donner une pression (14) de commande sur la base de la modification de la pression (18) du conduit principal pour de l'air, qui est retenue au corps (4) de support par une liaison (54, 60) par bride, laquelle est rendue étanche par un joint (-6) de soupape de commande suivant l'une des revendications précédentes, la partie (8) principale étant conçue pour modifier la pression (16) de cylindre de frein sur la base de la pression de commande.
